(19) **Europäisches Patentamt** / **European Patent Office** / **Office européen des brevets**

(11) **EP 2 583 299 B1**

(12) **FASCICULE DE BREVET EUROPEEN**

(45) Date de publication et mention de la délivrance du brevet:
**25.02.2015 Bulletin 2015/09**

(51) Int Cl.:
***H01J 29/89*** *(2006.01)*    ***H01J 31/50*** *(2006.01)*

(21) Numéro de dépôt: **11725470.6**

(22) Date de dépôt: **17.06.2011**

(86) Numéro de dépôt international:
**PCT/EP2011/060075**

(87) Numéro de publication internationale:
**WO 2011/157809 (22.12.2011 Gazette 2011/51)**

(54) **ÉCRAN PHOSPHORE À FIBRES OPTIQUES COMPORTANT UN FILTRE ANGULAIRE**

FASEROPTISCHER PHOSPHORSCHIRM MIT WINKELFILTER

FIBER OPTIC PHOSPHOR SCREEN COMPRISING AN ANGULAR FILTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.06.2010 FR 1054859**

(43) Date de publication de la demande:
**24.04.2013 Bulletin 2013/17**

(73) Titulaire: **Photonis France**
**19100 Brive (FR)**

(72) Inventeurs:
• **NÜTZEL, Gert**
**2611 RV Delft (NL)**
• **LAVOUTE, Pascal**
**F-19100 Brive-La-Gaillarde (FR)**
• **FONTAINE, Christophe**
**F-19270 Ussac (FR)**

(74) Mandataire: **Ilgart, Jean-Christophe**
**Brevalex**
**95, rue d'Amsterdam**
**75378 Paris Cedex 8 (FR)**

(56) Documents cités:
EP-A1- 0 848 410     JP-A- 59 201 349
US-A- 4 739 172     US-A- 5 127 080
US-A- 5 594 253

**Description**

**DOMAINE TECHNIQUE**

La présente invention se rapporte au domaine général des écrans phosphore à fibres optiques, c'est-à-dire aux écrans comportant une couche de phosphore en film mince et une plaque de fibres optiques (*fiber optic faceplate,* en anglais).

L'invention s'applique particulièrement aux tubes intensificateurs d'image, par exemple aux tubes à rayons X utilisés dans le domaine médical ou aux tubes utilisés pour la vision nocturne.

**ETAT DE LA TECHNIQUE ANTERIEURE**

De nombreux dispositifs utilisent des écrans phosphore à fibres optiques. C'est le cas notamment des tubes intensificateurs d'image utilisés dans le cadre de la vision nocturne.

Ces dispositifs comportent habituellement trois éléments principaux, à savoir une photocathode, une galette de micro-canaux et un écran phosphore, par exemple à fibres optiques.

La photocathode reçoit les photons incidents provenant de l'environnement extérieur pour les convertir en photoélectrons suivant un motif correspondant à l'image de l'environnement observé.

La galette de micro-canaux multiplie les photoélectrons qui sont ensuite transformés par l'écran phosphore en signal lumineux intensifié.

L'écran phosphore à fibres optiques comprend également une plaque de fibres optiques qui transmet le signal lumineux à l'extérieur du tube, par exemple à des moyens de visualisation pour l'utilisateur de ce dispositif de vision nocturne.

Un tel écran phosphore à fibres optiques comprend donc une couche de phosphore et une plaque de fibres optiques.

La couche de phosphore est habituellement formée d'une poudre de phosphore appliquée sur la surface de la plaque de fibres optiques. La poudre peut être déposée à l'aide d'une technique connue de l'homme du métier, telle que la sédimentation, le brossage (*brushing,* en anglais), la décantation (*settling,* en anglais), la pulvérisation (*spraying,* en anglais) etc. La taille des grains de phosphore varie typiquement entre $1\mu$m et $10\mu$m et l'épaisseur moyenne de la couche de phosphore est de l'ordre de $5\mu$m.

Cependant, cet écran phosphore à poudre présente plusieurs inconvénients. La poudre présente une surface totale importante qui émet une grande quantité de gaz à partir des constituants du phosphore. Ce dégazage important est à éviter pour une utilisation de l'écran phosphore dans un environnement sous ultra-vide (de l'ordre de $10^{-10}$ torrs). De plus, un liant, par exemple une colle, peut être nécessaire pour assurer le maintien des grains de phosphore contre la plaque de fibres optiques, ce qui complique le processus de réalisation du dispositif et peut modifier les propriétés optiques de celui-ci. Par ailleurs, la structure poudreuse induit un effet de grain au niveau de l'image optique résultante.

La couche de phosphore peut alternativement être une couche de phosphore en film mince, formée d'un film solide de phosphore non-granulaire. A la différence de la couche de phosphore en poudre, la couche de phosphore en film mince est réalisée en un matériau continu, c'est-à-dire non-particulaire ou non-granulaire. Elle peut être obtenue par des techniques de dépôt physique en phase vapeur, par exemple par évaporation ou pulvérisation *(sputtering* en anglais), ou par des techniques de dépôt chimique en phase vapeur.

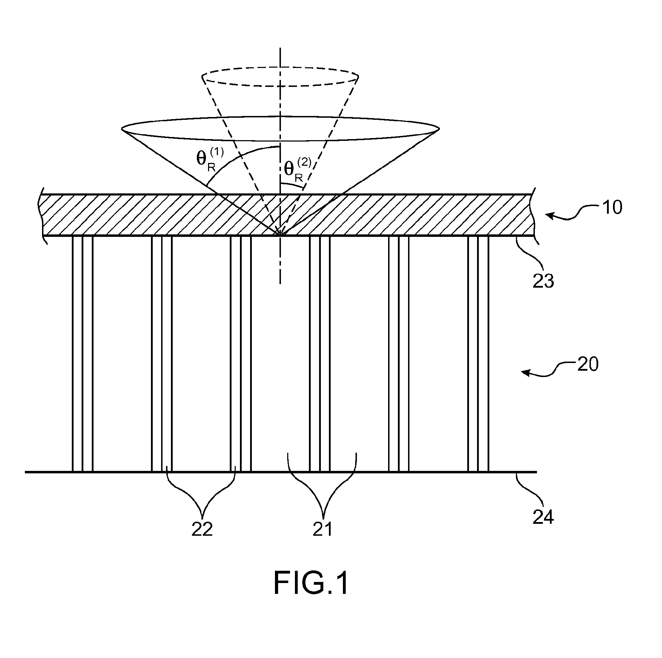

Un écran phosphore à fibres optiques de ce type comprend donc une couche de phosphore en film mince et une plaque de fibres optiques, tel que l'illustre schématiquement en coupe transversale la Figure 1.

La plaque 20 de fibres optiques est classiquement formée d'un grand nombre de fibres optiques assemblées en faisceau. Chaque fibre optique comporte un coeur 21 entouré d'une gaine 22. Les fibres optiques s'étendent suivant l'épaisseur de la plaque 20, entre une face avant 23 et une face arrière 24.

Une couche de phosphore en film mince 10 est en contact avec la face avant 23 de la plaque 20 de fibres optiques et s'étend sur celle-ci de manière à la recouvrir entièrement.

Deux ouvertures angulaires peuvent être définies à l'interface entre la couche de phosphore en film mince et le coeur des fibres optiques, à savoir le cône de transmission dans le coeur des fibres optiques des rayons lumineux émis par la couche de phosphore en film mince, et l'ouverture numérique des fibres optiques.

Le cône de transmission de rayon lumineux dans le coeur des fibres optiques est classiquement défini par application de la loi de Snell-Descartes à l'interface « couche de phosphore / coeur de la fibre optique adjacente ». Comme le montre la Figure 1, il est caractérisé par un premier angle critique $\theta_{th}^{(1)} = \arcsin\left(n_C/n_P\right)$. On note ici $n_C$ et $n_P$ les indices optiques, ou indices de réfraction, du coeur 21 des fibres optiques et de la couche de phosphore en film mince 10, respectivement. Aussi, tout rayon lumineux dont l'angle d'incidence $\theta_p$ à ladite interface est strictement inférieur au premier angle critique $\theta_{th}^{(1)}$ est réfracté dans le coeur 21 de la fibre. Dans le cas contraire, le rayon lumineux est réfléchi par réflexion totale interne.

L'ouverture numérique des fibres optiques forme une seconde ouverture angulaire à l'interface entre la couche de phosphore en film mince 10 et le coeur 21 des fibres, caractérisée par un second angle critique $\theta_{th}^{(2)} = \arcsin\left(\sqrt{n_C{}^2 - n_G{}^2}\Big/n_P\right)$ où $n_G$ est l'indice optique de la gaine des fibres. Aussi, un rayon lumineux qui pénètre dans le coeur 21 de la fibre et dont l'angle d'incidence $\theta_p$ à ladite interface « couche de phosphore / coeur de la fibre » est inférieur ou égal à ce second angle critique $\theta_{th}^{(2)}$ reste localisé dans le coeur 21 de la fibre, en raison du phénomène de réflexion totale interne. Le rayon lumineux est alors guidé par la fibre sans perte, hormis l'atténuation caractéristique de la fibre optique.

Cependant, ce type d'écran phosphore présente certains inconvénients, relatifs à ces deux ouvertures angulaires.

En effet, comme le montrent leurs expressions, les premier et second angles critiques ne peuvent être égaux. De plus, le premier angle critique $\theta_{th}^{(1)}$ est habituellement sensiblement supérieur au second angle critique $\theta_{th}^{(2)}$.

A titre illustratif, pour des valeurs habituelles des indices optiques du coeur et de la gaine d'une fibre, par exemple $n_C \sim 1,8$, $n_G \sim 1,4$ et $n_P \sim 2,2$, les premier et second angles critiques sont respectivement de l'ordre de 55° et 30°, ce qui donne un rapport $\theta_{th}^{(2)} / \theta_{th}^{(1)}$ de l'ordre de 0,6.

L'ouverture numérique des fibres optiques apparaît donc sensiblement plus restreinte que le cône de transmission de rayon lumineux dans le coeur des fibres.

En conséquence, tout rayon lumineux émis par la couche de phosphore en film mince 10 et présentant un angle incident $\theta_p$ compris entre les deux angles critiques est transmis dans le coeur 21 de la fibre optique puis réfracté dans la gaine 22, formant ainsi de la lumière parasite. Dans l'exemple précédent, le risque qu'un rayon lumineux soit compris entre ces deux angles critiques est de l'ordre de 70%.

Il apparaît clairement que ce risque est particulièrement élevé et diminue sensiblement les performances de l'écran phosphore et en conséquence celles du dispositif optique le contenant. Plus précisément, l'image de sortie présente un contraste fortement diminué. Par ailleurs, dans le cas où ce rayon lumineux reste capturé dans la plaque de fibres optiques et ne participe donc pas à la formation de l'image de sortie, l'efficacité de l'écran phosphore est sensiblement dégradée. EP 0 848 410 A1, JP 59201349, US 5,127,080, US 5,594,253 et US 4,739,172 divulguent un écran à fibres optiques selon le préambule de la revendication 1. Dans US 4,739,172 une couche (20) de métal-oxyde est disposée entre la couche de phosphore et la face de la plaque de fibres optiques, pour séparer la couche de phosphore et la face de la plaque de fibres optiques par une distance (18).

**EXPOSÉ DE L'INVENTION**

L'invention a principalement pour but de présenter un écran phosphore à fibres optiques qui comprend une couche de phosphore en film mince, permettant de diminuer les risques de réfraction de rayons lumineux, initialement transmis dans le coeur d'une fibre optique, dans la gaine correspondante.

Pour ce faire, l'invention a pour objet un écran phosphore à fibres optiques comprenant une couche de phosphore en film mince et une plaque de fibres optiques assemblées en faisceau et orientées suivant l'épaisseur de ladite plaque, chaque fibre optique comportant un coeur d'indice optique $n_C$ entouré d'une gaine d'indice optique $n_G$, ladite couche de phosphore en film mince étant disposée sur une face de la plaque.

Selon l'invention, ledit écran phosphore à fibres optiques comprend un filtre angulaire comportant au moins une couche, disposé entre ladite couche de phosphore en film mince et ladite face de la plaque, de sorte que tout rayon lumineux émis par la couche de phosphore en film mince et traversant le filtre angulaire pénètre dans le coeur de la fibre optique adjacente avec un angle de réfraction inférieur ou égal à $\pi/2 - \arcsin(n_G/n_C)$.

Ainsi, tout rayon lumineux émis par la couche de phosphore et transmis par le filtre angulaire dans le coeur de la fibre optique adjacente reste localisé dans le coeur par réflexion totale interne entre le coeur et la gaine de la fibre. En d'autres termes, le rayon lumineux qui pénètre dans la fibre optique adjacente appartient à l'ouverture numérique de la fibre. A la différence de l'exemple de l'art antérieur mentionné précédemment, l'invention réduit de manière importante la lumière parasite présente à l'intérieur de la gaine des différentes fibres optiques. L'efficacité de l'écran phosphore est améliorée et l'image de sortie formée par l'écran phosphore présente un meilleur contraste.

Par couche de phosphore en film mince, on entend une couche de phosphore réalisée sous forme de film mince en un matériau non-particulaire ou non-granulaire.

Par fibre optique adjacente, on entend la fibre optique disposée en regard de la zone d'entrée du rayon lumineux dans le filtre angulaire.

Par couche mince, on entend une couche dont l'épaisseur est faible par rapport à ses dimensions de longueur et de largeur. Son épaisseur est habituellement de l'ordre de quelques nanomètres à quelques centaines de nanomètres.

L'efficacité de l'écran phosphore est ici définie comme le rapport entre le nombre de rayons lumineux, ou de photons, émis par la couche de phosphore en film mince et participant effectivement à la formation d'une image et le nombre total de rayons lumineux, ou de photons, émis par la couche de phosphore en film mince. On comprend que les rayons lumineux réfractés dans la gaine d'une fibre optique sont susceptibles de ne pas participer à la formation de l'image de sortie, donc de dégrader l'efficacité de l'écran phosphore et/ou de diminuer le contraste de l'image de sortie.

De préférence, ledit filtre angulaire est directement au contact de la couche de phosphore en film mince d'une part et de ladite face de la plaque de fibres optiques d'autre part. L'épaisseur dudit filtre angulaire est, de préférence, sensiblement constante. Chaque fibre optique débouche préférentiellement au niveau de ladite face de la plaque de manière sensiblement orthogonale.

Selon le mode de réalisation préféré de l'invention, ledit filtre angulaire est un filtre interférentiel comportant un empilement de couches minces dont les indices optiques et les épaisseurs sont adaptés à transmettre un rayon lumineux dans le coeur de la fibre optique adjacente selon un angle de réfraction inférieur ou égal à $\pi/2 - \arcsin(n_G/n_C)$.

Avantageusement, le phosphore de la couche de phosphore en film mince émet un rayonnement quasi-monochromatique. Le filtre interférentiel peut être un filtre passe-bande ou un filtre passe-bas.

De préférence, ladite pluralité de couches minces du filtre interférentiel comprend un premier ensemble de couches minces en un premier matériau et un second ensemble de couches minces en un second matériau présentant un indice optique inférieur à celui du premier matériau. Le premier matériau peut être choisi, par exemple, parmi le $TiO_2$ et le $Ta_2O_5$, et le second matériau peut être choisi, par exemple, parmi le $MgF_2$, le $CaF_2$ et le $SiO_2$.

Le premier matériau et/ou le second matériau peuvent former un milieu poreux ou un milieu non-poreux. Dans le cas d'un milieu poreux, lesdits premier et second matériaux peuvent être des tiges nanométriques de $SiO_2$ et/ou de $TiO_2$.

Selon un second mode de réalisation de l'invention, ledit filtre angulaire comporte une unique couche.

Avantageusement, ladite unique couche du filtre angulaire présente un indice optique inférieur ou égal à $\sqrt{n_C^2 - n_G^2}$.

Le matériau de l'unique couche du filtre angulaire peut former un milieu non-poreux, ou, en variante, un milieu poreux. Dans le cas d'un milieu poreux, ladite couche du filtre angulaire peut être formée d'une pluralité de tiges nanométriques de $SiO_2$.

Avantageusement, ladite couche de phosphore en film mince forme une pluralité de plots de phosphore disposés de manière à recouvrir chacun le coeur de la fibre en regard, ou fibre optique adjacente, selon la définition donnée précédemment. Lesdits plots sont spatialement distincts les uns des autres.

Par plot, on entend une couche dont l'épaisseur n'est pas négligeable vis-à-vis de ses deux autres dimensions de longueur et de largeur. L'épaisseur d'un plot peut être du même ordre de grandeur que sa longueur et/ou sa largeur.

Avantageusement, le filtre angulaire forme une pluralité de plots disposés de manière à être chacun sensiblement recouvert par un plot de phosphore.

Chaque ensemble formé d'un empilement d'un plot de phosphore et d'un plot de filtre angulaire peut être disposé dans un évidement de la face avant de la plaque de fibres optiques, et délimité latéralement par une partie en saillie de gaine de fibre optique. Lesdits ensembles de plots sont physiquement distincts les uns des autres. De préférence, la surface latérale de la partie en saillie de gaine de fibre optique est recouverte d'une couche d'un matériau métallique. Cette couche est donc réfléchissante vis-à-vis des rayons lumineux émis par les plots de phosphore.

Alternativement, chaque ensemble formé d'un empilement d'un plot de phosphore et d'un plot de filtre angulaire peut être délimité latéralement par des murs rapportés, chaque mur étant disposé de manière à recouvrir sensiblement la gaine de la fibre optique adjacente. Lesdits ensembles de plots sont physiquement distincts les uns des autres. Les murs peuvent être réalisés dans un matériau réfléchissant ou absorbant pour les rayons lumineux émis par les plots de phosphore.

Avantageusement, ladite couche de phosphore en film mince est recouverte, sur sa face opposée audit filtre angulaire, d'une couche réfléchissante vis-à-vis des rayons lumineux émis par ladite couche de phosphore en film mince. Ladite couche réfléchissante est, de préférence, en aluminium.

L'invention porte également sur un dispositif optique comportant une photocathode pour recevoir un rayonnement et émettre en réponse des électrons, et un écran phosphore à fibres optiques selon l'une quelconque des caractéristiques précédentes pour former une image à partir desdits électrons.

Le dispositif optique peut comporter, en outre, des moyens de multiplications d'électrons disposés entre ladite photocathode et ledit écran phosphore.

Ledit dispositif optique peut être un tube intensificateur d'image, par exemple pour la vision nocturne.

D'autres avantages et caractéristiques préférées de l'invention apparaîtront dans la description détaillée non limitative ci-dessous.

## BRÈVE DESCRIPTION DES DESSINS

On décrira à présent, à titre d'exemples non limitatifs, des modes de réalisation de l'invention, en se référant aux dessins annexés, dans lesquels :

La Figure 1, déjà décrite, est une vue schématique en coupe transversale d'un écran phosphore à fibres optiques selon un exemple de l'art antérieur ;

La Figure 2 est une vue schématique en coupe transversale d'un écran phosphore selon l'invention ;

La Figure 3 est une vue schématique en coupe transversale d'un écran phosphore selon un mode de réalisation préféré de l'invention, dans lequel le filtre angulaire est un filtre interférentiel ;

Les Figures 4A et 4B représentent schématiquement l'évolution de la transmittance du filtre angulaire dans le domaine des longueurs d'onde, en fonction de l'angle d'incidence d'un rayon lumineux (Figure 4A), et la relation correspondante de la transmittance en fonction de l'angle d'incidence dudit rayon (Figure 4B) ;

La Figure 5 est une vue schématique en coupe transversale d'un écran phosphore selon un second mode de réalisation de l'invention, dans lequel le filtre angulaire est formé d'une unique couche d'un matériau formant un milieu poreux ou non-poreux ;

La Figure 6 est une vue schématique en coupe transversale d'un écran phosphore selon un autre mode de réalisation, dans lequel le filtre angulaire et la couche de phosphore en film mince se présentent sous forme des plots de couches recouvrant le coeur de chaque fibre optique et délimités latéralement par des parties de gaine de fibres ;

La Figure 7 est une vue schématique en coupe transversale d'un écran phosphore selon un autre mode de réalisation qui diffère du mode précédent en ce que les plots de couches sont délimités par des murs d'un matériau déposé ; et

Les Figures 8A à 8E illustrent les différentes étapes du procédé de réalisation de l'écran phosphore représenté sur la Figure 7.

## EXPOSÉ DÉTAILLÉ D'UN MODE DE RÉALISATION PRÉFÉRÉ

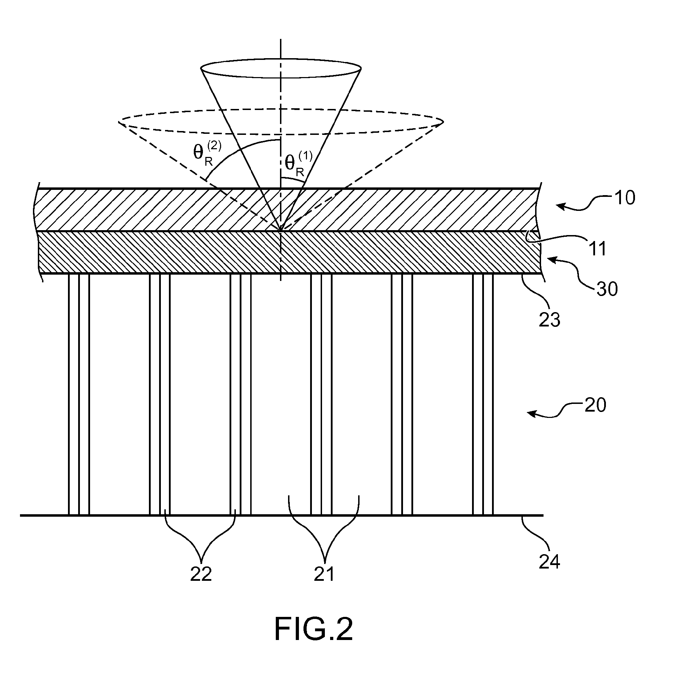

La Figure 2 illustre un écran phosphore à fibres optiques selon l'invention pouvant équiper, par exemple, un tube intensificateur d'image.

L'écran phosphore selon l'invention comprend une couche de phosphore en film mince 10 et une plaque de fibres optiques 20.

Les fibres optiques de la plaque 20 sont assemblées en faisceau et orientées suivant l'épaisseur de ladite plaque.

Chaque fibre optique comporte un coeur 21 d'indice optique $n_C$ entouré d'une gaine 22 d'indice optique $n_G$.

On considère que les matériaux formant le coeur 21 et la gaine 22 des fibres optiques de la plaque 20 de fibres sont identiques pour chacune des fibres.

Les fibres optiques débouchent au niveau de la face avant 23 de la plaque de manière sensiblement orthogonale.

La couche de phosphore en film mince 10 est disposée sur ladite face avant 23 de la plaque 20. Elle recouvre la face avant 23 de la plaque 20 de fibres optiques, uniformément ou de manière discontinue, sans être en contact avec celle-ci.

Comme expliqué précédemment, la couche de phosphore en film mince 10 forme un milieu continu, c'est-à-dire un milieu non-particulaire ou non-granulaire, par opposition au milieu particulaire de la couche de phosphore en poudre. Son épaisseur est comprise entre quelques dixièmes de microns à quelques dizaines de microns, par exemple entre 0,5 $\mu$m et 50 $\mu$m.

Le matériau de la couche de phosphore en film mince peut comprendre, par exemple, du Gd2O2S:Tb (GOS:Tb) ou du grenat d'yttrium-aluminium (YAG) dopé au cérium.

Elle peut être obtenue par diverses techniques connues de dépôt physique en phase vapeur, par exemple par évaporation ou pulvérisation (sputtering en anglais), ou par des techniques connues de dépôt chimique en phase vapeur telles que, par exemple, le dépôt en couche atomique ALD (Atomic Layer Deposition en anglais). L'indice optique de la couche de phosphore 10 est noté $n_P$.

L'écran phosphore comprend également un filtre angulaire 30 comportant au moins une couche, disposé entre ladite couche de phosphore en film mince 10 et ladite face 23 de la plaque 20.

Ledit filtre angulaire 30 est directement au contact de la couche de phosphore en film mince 10 d'une part et de ladite face 23 de la plaque 20 de fibres optiques d'autre part. De préférence, le filtre angulaire présente une épaisseur sensiblement constante.

Selon l'invention, le filtre angulaire 30 assure que tout rayon lumineux émis par la couche de phosphore en film mince 10 et le traversant pénètre ensuite dans le coeur 21 de la fibre optique adjacente avec un angle de réfraction inférieur ou égal à $\pi/2 - \arcsin(n_G/n_C)$.

Ainsi, tout rayon lumineux émis par la couche de phosphore en film mince 10 qui pénètre dans le coeur 21 d'une fibre optique avec un tel angle de réfraction appartient à l'ouverture numérique de celle-ci.

Par convention, un angle d'incidence et un angle de réfraction sont toujours définis par rapport à la normale à l'interface entre deux milieux d'indices optiques différents.

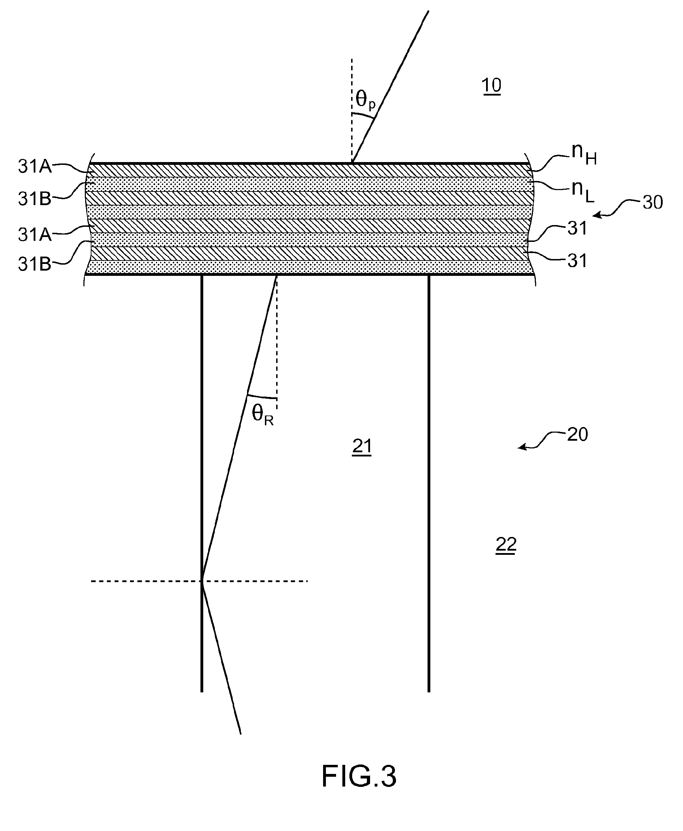

Selon le mode de réalisation préféré de l'invention, le filtre angulaire 30 est un filtre interférentiel. Comme l'illustre la Figure 3, il comprend un empilement d'une pluralité de couches minces 31.

Par couche mince, on entend une couche dont la dimension suivant l'épaisseur est petite comparée aux dimensions de longueur et de largeur. Son épaisseur est typiquement de l'ordre de quelques nanomètres à quelques centaines de nanomètres.

De préférence, ladite pluralité de couches minces comprend au moins deux ensembles 31A, 31B de couches minces dont les couches minces d'un même ensemble sont en un même matériau. Les matériaux des différents ensembles présentent des indices optiques différents les uns des autres.

Les épaisseurs et les matériaux sont choisis de manière à assurer que tout rayon lumineux transmis par le filtre angulaire 30 pénètre dans le coeur de la fibre optique adjacente selon un angle de réfraction inférieur ou égal à $\pi/2 - \arcsin(n_G/n_C)$.

La pluralité de couches minces peut comprendre un premier ensemble 31A de couches minces en un premier matériau de haut indice optique $n_H$ et un second ensemble 31B de couches minces en un second matériau de bas indice optique $n_L$ inférieur à celui du premier matériau.

Les couches minces 31 sont disposées de manière à présenter une alternance entre les couches minces du premier ensemble 31A et les couches minces du second ensemble 31B.

Les premier et second matériaux peuvent former chacun un milieu continu. Ils peuvent être choisis, pour le premier matériau, parmi le $TiO_2$ (n~1, 81) et le $Ta_2O_5$ (n~2, 50), et pour le second matériau, parmi le $MgF_2$ (n~1, 39), le $CaF_2$ (n~1, 44) et le $SiO_2$ (n~1, 55).

Les couches minces 31 peuvent présenter une épaisseur de quart d'onde, en fonction de la longueur d'onde des rayons lumineux émis par la couche de phosphore en film mince 10. La réflectance du filtre interférentiel est ainsi diminuée.

Le filtre interférentiel 30 est un filtre passe-bande ou un filtre passe-bas, et la couche de phosphore en film mince 10 émet un rayonnement lumineux monochromatique ou quasi-monochromatique.

Le phosphore Gd2O2S:Tb, pour lequel la longueur d'onde est de l'ordre de 550nm, est un exemple de matériau émettant un rayonnement quasi-monochromatique. Le phosphore comportant du grenat d'yttrium-aluminium (YAG) dopé au cérium présentant une longueur d'onde de l'ordre de 550nm peut également être utilisé.

La propriété optique de filtrage angulaire du filtre interférentiel 30 est maintenant décrite.

La largeur de bande $\Delta$ d'un filtre interférentiel est habituellement définie à incidence nulle $\theta=0°$, à partir de l'évolution $T(\lambda)$ de la transmittance du filtre en fonction de la longueur d'onde du rayonnement incident.

Il est connu que pour un rayon lumineux présentant un angle d'incidence non nul, la largeur de bande $\Delta_\theta$ du filtre est modifiée et présente notamment un décalage vers les faibles longueurs d'onde. Cette modification provient du fait que l'épaisseur apparente des couches minces du filtre augmente avec l'angle d'incidence.

Le décalage de la largeur de bande $\Delta_\theta$ du filtre vers les faibles longueurs d'onde se traduit par un décalage vers les faibles longueurs d'onde de la valeur, ou des valeurs, de coupure du filtre. Un filtre passe-bas comporte en effet une seule valeur de coupure et un filtre passe-bande comporte deux valeurs de coupure, haute et basse.

Par valeur de coupure de la largeur de bande, on entend la valeur de la longueur d'onde pour laquelle la transmittance est inférieure à 50% de sa valeur maximale, ou 20%, 10%, voire 5%.

A titre illustratif, dans le cas d'un filtre passe-bande, la relation entre la longueur d'onde centrale du filtre et l'angle d'incidence peut être décrite par l'expression suivante :

$$\lambda_\theta = \lambda_0 \cdot \sqrt{1 - \left(\frac{n_P}{n^*}\right)^2 \sin^2\theta}$$

où $\theta$ est l'angle d'incidence d'un rayon lumineux émis par la couche de phosphore en film mince à l'interface avec le filtre interférentiel, $\lambda_0$ est la valeur de la longueur d'onde centrale du filtre à incidence nulle, $n_P$ est l'indice optique de la couche de phosphore en film mince et $n^*$ est la valeur de l'indice optique effectif du filtre.

A titre illustratif, pour une valeur de coupure haute de l'ordre de 570nm à incidence nulle d'un filtre interférentiel passe-bande, et pour des indices optiques $n_P$~2,2 et $n^*$~2, la valeur de coupure devient de l'ordre de 480nm pour un angle incident de 30°.

Ainsi, dans cet exemple, le filtre interférentiel est passant pour un rayonnement de longueur d'onde de 550nm émis à incidence nulle par la couche de phosphore en film mince, et non passant lorsque ce rayonnement présente un angle d'incidence de 30°.

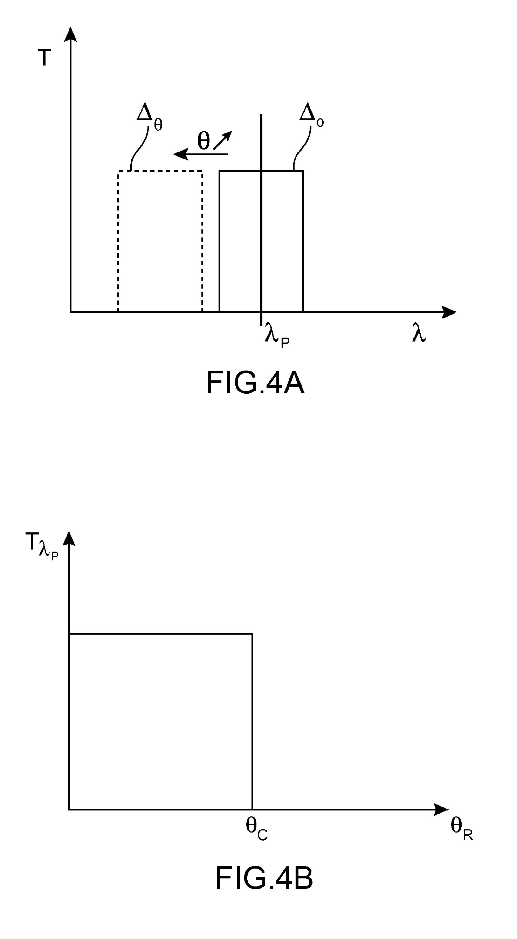

Il apparaît, comme le montre les Figures 4A et 4B, qu'un filtre interférentiel passe-bande (Figure 4A) ou passe-bas dans le domaine des longueurs d'onde $T(\lambda)$ équivaut à un filtre passe-bas (Figure 4B) dans le domaine des angles d'incidence $T(\theta)$ pour une longueur d'onde déterminée.

En effet, lorsque le décalage de la bande-passante $A_\theta$ vers les faibles longueurs d'onde est suffisant, la longueur d'onde $\lambda_P$ du rayonnement émis par la couche de phosphore en film mince est située en-dehors de la bande-passante. Un angle incident de coupure $\theta_C$ peut alors être déterminé, qui caractérise le filtre passe-bas dans le domaine des angles d'incidence $T(\theta)$ pour la longueur d'onde $\lambda_P$. Le rayon lumineux est alors réfléchi, il n'appartient plus au cône de transmission du filtre interférentiel dans le coeur de la fibre optique adjacente. L'angle incident de coupure peut également être noté $\theta_{th}^{(1)}$, selon la définition de cet angle donnée plus loin.

Par ailleurs, du fait que les indices optiques $n_H$, $n_L$ des couches minces 31 formant le filtre interférentiel 30 sont connus, la relation $\theta_R(\theta_P)$ entre l'angle d'incidence $\theta_P$ d'un rayon lumineux émis par la couche de phosphore en film mince 10 et l'angle de réfraction $\theta_R$ dans le coeur 21 de la fibre optique adjacente de ce même rayon lumineux réfracté est directement déterminée par la loi de Snell-Descartes.

Aussi, le filtre interférentiel 30 est réalisé et la couche de phosphore en film mince 10 choisie de sorte que l'angle incident de coupure $\theta_c$ du filtre interférentiel entraîne un angle de réfraction $\theta_R$ inférieur ou égal à $\pi/2$-arcsin($n_G/n_c$) dans le coeur 21 de la fibre optique adjacente.

Lors de la réalisation du filtre interférentiel, dans la mesure où une pluralité de variables est nécessaire pour obtenir la bande-passante requise, on calcule avantageusement à l'aide d'un programme d'ordinateur la transmittance en fonction de la longueur d'onde ainsi que la transmittance en fonction de l'angle d'incidence.

A titre illustratif, dans le cas d'une couche de phosphore 10 de Gd2O2S:Tb, le filtre interférentiel 30 peut comporter une pluralité de couches minces sous forme d'un empilement de couches de $TiO_2$ et de couches de $MgF_2$. Le filtre interférentiel peut comporter cinq couches minces, à savoir une couche de $MgF_2$ de 218nm, une couche de $TiO_2$ de 102nm, une couche de $MgF_2$ de 210nm, une couche de $TiO_2$ de 230nm et enfin une couche de $MgF_2$ de 218nm.

Le filtre interférentiel 30 peut être réalisé par les techniques connues de dépôt physique en phase vapeur, telles que, par exemple, la pulvérisation cathodique *(sputtering,* en anglais), l'évaporation, ou le dépôt physique en phase vapeur à faisceau d'électrons EBPVD (pour *electron beam physical vapour deposition,* en anglais). Les techniques connues de dépôt chimique en phase vapeur, telles que, par exemple, le dépôt en couche atomique ALD (*Atomic Layer Deposition,* en anglais) peuvent également être utilisées, ainsi que les techniques connues dites hybrides, telles que, par exemple, la pulvérisation réactive et le dépôt assisté par faisceau d'ions (IBAD, pour *ion beam assisted deposition, en anglais).*

En variante, les premier et second matériaux du filtre interférentiel peuvent former un milieu poreux. Ainsi, on peut utiliser un filtre interférentiel comportant un empilement de tiges nanométriques de $SiO_2$ et de $TiO_2$, dont les épaisseurs et les indices optiques peuvent être déterminés précisément, comme le présente l'article de Xi et al. intitulé « Optical thin-film materials with low refractive index for broadband elimination of Fresnel reflection », 2007, Nat. Photonics, Vol. 1, 176-179.

En effet, en utilisant la technique de dépôt physique en phase vapeur, dans laquelle le flux de vapeur présente un angle d'inclinaison par rapport au substrat, ici la face avant de la plaque de fibres optiques, on peut former des couches de $SiO_2$ ou de $TiO_2$ sous formes de nano-tiges. Les indices optiques peuvent varier de 1,46 à 1,05 pour le $SiO_2$, et de 2,7 à 1,3 pour le $TiO_2$.

Par ailleurs, le filtre interférentiel n'est pas limité à deux ensembles de couches minces mais peut comprendre trois ou quatre ensembles, ou plus, de couches minces.

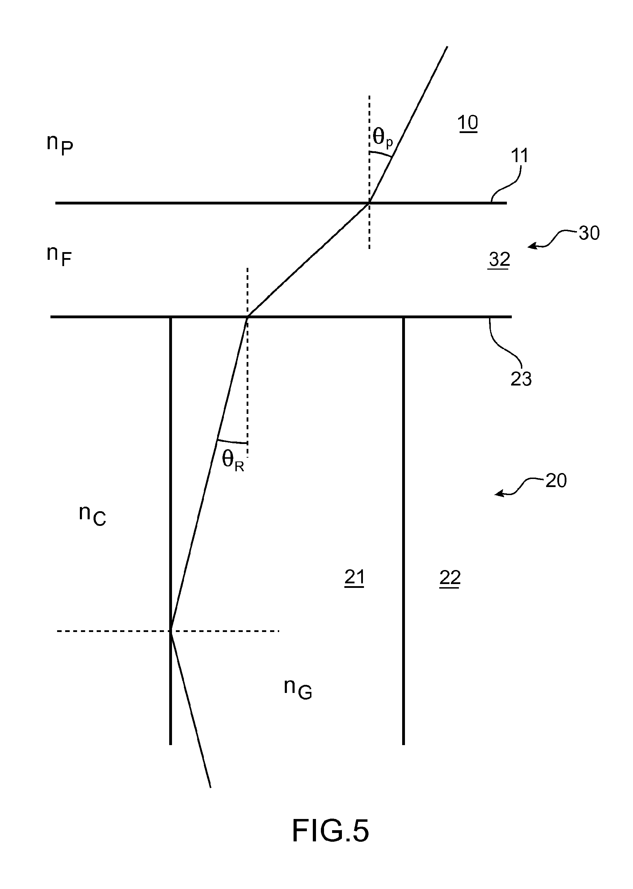

Selon un second mode de réalisation, le filtre angulaire 30 comprend une unique couche 32, présentant un indice optique noté $n_F$, comme l'illustrent les Figures 2 et 5.

L'indice optique de l'unique couche 32 est défini de sorte qu'un rayon lumineux émis par la couche de phosphore en film mince 10 et traversant le filtre angulaire 30 pénètre dans le coeur 21 de la fibre optique adjacente avec un angle de réfraction $\theta_R$ inférieur ou égal à $\pi/2$-arcsin($n_G/n_C$).

L'unique couche 32 est disposée entre la couche de phosphore en film mince 10 et la face avant 23 de la plaque 20 de fibres optiques, et est en contact direct avec celles-ci.

De manière similaire à l'exemple de l'art antérieur décrit précédemment, deux ouvertures angulaires peuvent être définies (Figure 2) à l'interface 11 entre la couche de phosphore en film mince 10 et l'unique couche 32 du filtre angulaire 30.

La première ouverture angulaire correspond au cône de transmission de rayons lumineux émis par la couche de phosphore 10 dans la couche mince du filtre angulaire 30.

Ce cône de transmission est défini par le premier angle critique $\theta_{th}^{(1)} = \arcsin\left(n_F / n_P\right)$. Ainsi, tout rayon lumineux émis par la couche de phosphore en film mince 10 et présentant un angle d'incidence à ladite interface 11 « couche de phosphore 10 / unique couche 32 du filtre 30 » strictement inférieur au premier angle critique $\theta_{th}^{(1)}$ est transmis par réfraction dans le filtre angulaire 30, ou réfléchi par réflexion totale interne dans le cas contraire.

La seconde ouverture angulaire correspond à l'ouverture numérique des fibres optiques, définie non pas à l'entrée des fibres optiques, mais à l'interface 11 entre la couche de phosphore en film mince 10 et l'unique couche 32 filtre angulaire 30.

Par application de la loi de Snell-Descartes, l'ouverture numérique est caractérisée par un second angle critique $\theta_{th}^{(2)} = \arcsin\left(\sqrt{n_C^{\ 2} - n_G^{\ 2}}\Big/ n_P\right)$. Tout rayon lumineux émis par la couche de phosphore en film mince 10 et présentant un angle d'incidence $\theta_P$ vis-à-vis de ladite interface 11 inférieur ou égal audit second angle critique est transmis dans le coeur 21 de la fibre optique adjacente et reste localisé dans le coeur 21 par réflexion totale interne entre le coeur 21 et la gaine 22 de la fibre considérée.

L'indice optique $n_F$ de l'unique couche du filtre angulaire peut être choisi de sorte que $\theta_{th}^{(1)} \leq \theta_{th}^{(2)}$, ce qui se traduit par la relation $n_F \leq \sqrt{n_C^{\ 2} - n_G^{\ 2}}$.

Ainsi, un rayon lumineux émis par la couche de phosphore en film mince 10 et présentant un angle incident $\theta_P$ strictement inférieur à $\theta_{th}^{(1)}$ traverse le filtre angulaire et pénètre dans le coeur de la fibre optique adjacente avec un angle de réfraction inférieur ou égal à $\pi/2$-arcsin($n_G/n_C$). Aussi, il reste localisé dans le coeur 21 de la fibre par réflexion totale interne entre le coeur 21 et la gaine 22 de la fibre considérée.

Il est particulièrement avantageux que l'indice optique $n_F$ soit choisi proche ou égal à $\sqrt{n_C^{\ 2} - n_G^{\ 2}}$. Ainsi, les premier et second angles critiques sont sensiblement égaux, ce qui fait coïncider les deux ouvertures optiques précédemment définies. Le filtre angulaire 30 présente alors une fonction d'adaptation d'impédances optiques. En effet, le cône de transmission présente l'ouverture la plus large pour laquelle tout rayon lumineux émis par la couche de phosphore 10 incident vis-à-vis de l'interface 11 « couche de phosphore / filtre angulaire » appartient à l'ouverture numérique de la fibre optique adjacente.

A titre d'exemple, pour une couche de phosphore en film mince 10 d'indice $n_P \sim 2,2$ et des fibres optiques dont l'indice optique du coeur 21 est $n_C \sim 1,8$ et l'indice de la gaine 22 est $n_G \sim 1,4$, l'indice $n_F$ de l'unique couche 32 du filtre angulaire 30 doit être inférieur ou égal à 1,13.

De préférence, l'épaisseur de l'unique couche 32 du filtre angulaire 30 est sensiblement de l'ordre du quart d'onde. Cette épaisseur est donc déterminée en fonction de la longueur d'onde ou de la gamme de longueurs d'ondes des rayons lumineux émis par la couche de phosphore en film mince 10. Il est donc avantageux que la couche de phosphore en film mince 10 émette un rayonnement quasi-monochromatique.

L'unique couche 32 du filtre angulaire 30 peut être réalisée en un matériau formant un milieu non-poreux, par opposition à un milieu poreux. Ledit matériau peut être choisi de sorte que son indice optique vérifie la relation $n_F \leq \sqrt{n_C{}^2 - n_G{}^2}$ .

A titre d'exemple, pour des fibres optiques dont l'indice du coeur 21 est $n_C \sim 2.1$ et l'indice de la gaine 22 est $n_G \sim 1.5$, l'indice $n_F$ de la couche unique 32 du filtre angulaire 30 doit être inférieur ou égal à 1,47. Le matériau de la couche unique 32 peut être choisi parmi le $MgF_2$, le $CaF_2$ ou le $SiO_2$, dont les indices optiques sont, respectivement, sensiblement égaux à 1,39, 1,44, et 1,46.

A titre illustratif, dans le cas d'une couche de phosphore 10 de Gd2O2S:Tb, le filtre angulaire 30 peut être formé d'une unique couche de $MgF_2$ d'une épaisseur de 260nm.

Le filtre angulaire 30 peut être réalisé par les techniques connues de dépôt physique en phase vapeur, telles que, par exemple, la pulvérisation cathodique *(sputtering,* en anglais), l'évaporation, ou le dépôt physique en phase vapeur à faisceau d'électrons EBPVD (pour *electron beam physical vapour deposition,* en anglais). Les techniques connues de dépôt chimique en phase vapeur, telles que, par exemple, le dépôt en couche atomique ALD (*Atomic Layer Deposition,* en anglais) peuvent également être utilisées, ainsi que les techniques connues dites hybrides, telles que, par exemple, la pulvérisation réactive et le dépôt assisté par faisceau d'ions (IBAD, pour *ion beam assisted deposition, en anglais)*.

Selon une variante du second mode de réalisation de l'invention, l'unique couche 32 peut être en un matériau formant un milieu poreux. La couche peut être réalisée de sorte que son indice optique $n_F$ vérifie la relation $n_F \leq \sqrt{n_C{}^2 - n_G{}^2}$ .

La couche 32 peut ainsi être formée de tiges de taille nanométrique de $SiO_2$, telle que présentée dans l'article de Xi et al. intitulé « Very low-refractive-index optical thin films consisting of an array of SiO2 nanorods », 2006, Opt. Lett., Vol. 31, No. 5, 601-603.

Les tiges de $SiO_2$ s'étendent de manière sensiblement rectiligne et inclinée à partir de la face avant de la plaque de fibres optiques. L'angle d'inclinaison est de l'ordre de 45°.

L'épaisseur de la couche unique 32 peut être de l'ordre de quelques dizaines à quelques centaines de nanomètres.

L'indice optique de la couche unique du filtre angulaire 30 peut être inférieur à $n_F \leq \sqrt{n_C{}^2 - n_G{}^2}$ . L'article cité indique un indice $n_F = 1,08$.

Ainsi, du fait du faible indice optique $n_F$ de la couche unique 32 du filtre angulaire 30, le rapport $\theta_{th}^{(2)} / \theta_{th}^{(1)}$ entre le second angle critique $\theta_{th}^{(2)}$ caractérisant l'ouverture numérique de la fibre optique adjacente au niveau de l'interface 11 « couche de phosphore / filtre angulaire » et le premier angle critique $\theta_{th}^{(1)}$ caractérisant le cône de transmission à ladite interface 11, est proche de 1.

A titre d'exemple, pour des indices optiques habituels de la couche de phosphore en film mince, du coeur et de la gaine de l'ordre de $n_P \sim 2,2$, $n_C \sim 1,8$, et $n_G \sim 1,4$, respectivement, et un indice du filtre angulaire $n_F \sim 1,08$, on obtient un rapport $\theta_{th}^{(2)} / \theta_{th}^{(1)}$ de l'ordre de 1. Ainsi, tous les rayons lumineux émis par la couche de phosphore en film mince 10 qui traversent le filtre angulaire 30 sont assurés de pénétrer dans le coeur 21 de la fibre optique adjacente et de rester localisés dans le coeur 21 par réflexion totale interne entre le coeur 21 et la gaine 22.

Le mode de réalisation de la couche unique en nano-tiges de $SiO_2$ est maintenant décrit, en référence à l'article, précédemment cité, de Xi et *al.* et publié dans Optics Letters.

Les nano-tiges sont obtenues par une technique de dépôt physique en phase vapeur, à angle oblique. Le flux de vapeur, ici de $SiO_2$, est obtenu par évaporation. Il est dirigé vers le substrat, ici la face avant de la plaque de fibres optiques, selon un angle d'inclinaison de l'ordre de 85°.

Du fait de l'inclinaison du flux de vapeur, les fluctuations aléatoires de croissance de la couche unique entraînent l'apparition de zones d'ombre qui ne peuvent être atteintes par le flux de vapeur.

Cet effet, appelé « *self-shadowing effect* » par les auteurs de l'article cité, se traduit par le fait que le dépôt a lieu préférentiellement dans les zones de croissance et non pas dans les zones d'ombre. Un réseau de nano-tiges est alors obtenu.

L'article cité indique que les nano-tiges sont espacées les unes des autres d'une distance inférieure à 30nm, donc bien inférieure à la gamme habituelle des longueurs d'onde des couches de phosphore en film mince utilisées dans les tubes intensificateurs d'image, ce qui permet de minimiser les effets de diffusion optique.

Par ailleurs, la technique de dépôt par évaporation utilisée permet de contrôler précisément l'épaisseur de la couche unique et donc de réaliser une couche quart-d'onde.

Enfin, l'article cité indique que la couche mince obtenue reste isotrope, malgré l'inclinaison des nano-tiges de $SiO_2$, du fait notamment de la porosité élevée et de la faible épaisseur de la couche unique.

Il est à noter qu'il est également possible de réaliser une couche unique formée de tiges de taille nanométrique de $TiO_2$ dont l'indice optique vérifie la condition $n_F \leq \sqrt{n_C^2 - n_G^2}$ .

Par ailleurs, une couche réflectrice (non représentée), par exemple en aluminium, est déposée sur la couche de phosphore en film mince, pour réfléchir tout rayon lumineux émis par la couche de phosphore en film mince dans une direction opposée au filtre angulaire. Ainsi, le rayon lumineux est réfléchi et transmis en direction de ce dernier.

La couche d'aluminium peut présenter une épaisseur comprise entre quelques nanomètres et quelques dizaines de nanomètres, par exemple entre 5nm et 10nm.

Quel que soit le mode de réalisation de l'invention, la couche de phosphore en film mince peut être structurée de manière à former une pluralité de plots de phosphore disposés de manière à recouvrir chacun le coeur de la fibre adjacente.

Ainsi, lorsqu'un rayon lumineux émis par un plot de phosphore n'appartient pas au cône de transmission dans le filtre angulaire, c'est-à-dire que l'angle d'incidence est supérieur à $\theta_C$ dans le cas du filtre interférentiel, ou supérieur à $\theta_{th}^{(1)}$ dans le cas d'un filtre angulaire à une seule couche, le rayon lumineux est réfléchi mais reste avantageusement localisé dans le plot initial. Le rayon lumineux est ensuite réfléchi à l'interface avec la couche d'aluminium jusqu'à ce qu'il présente l'angle d'incidence requis pour être transmis dans le filtre angulaire.

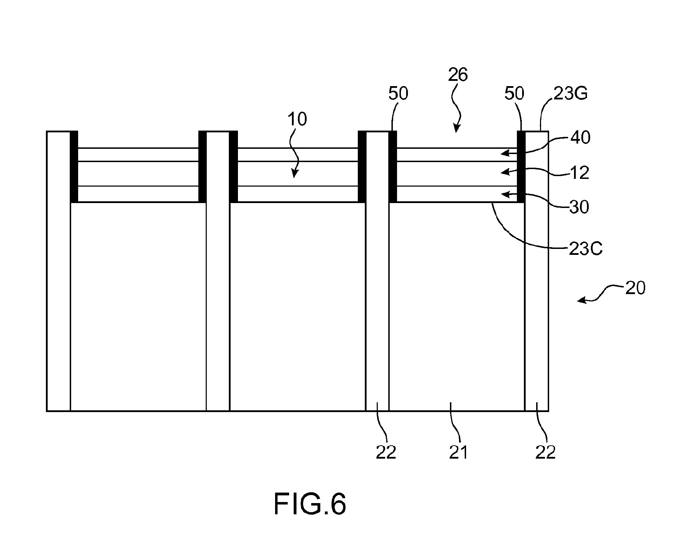

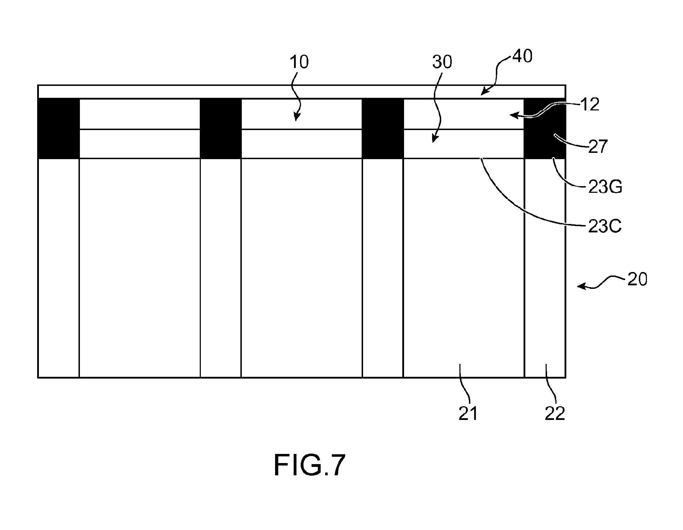

Les Figures 6 et 7 illustrent des modes de réalisation qui ne diffèrent de ceux décrits précédemment uniquement par le fait que la couche de phosphore à film mince 10 et le filtre angulaire 30 sont disposés de manière à ne recouvrir que le coeur 21 de chaque fibre adjacente, et non la gaine 22 de celle-ci.

Dans le mode de réalisation illustré sur la Figure 6, la face avant de la plaque 20 de fibres optiques est structurée de sorte que chaque fibre optique présente un décrochement de la face avant 23C du coeur 21 par rapport à la face avant 23G de la gaine 22. Ainsi, un évidement 26 est formé dans chaque fibre optique, au niveau de la face avant de la plaque 20, et est latéralement délimité par la partie de gaine 22 en saillie.

Le procédé de réalisation d'un tel écran phosphore est maintenant décrit.

On réalise lesdits évidements, par gravure à l'acide, au niveau de la face avant de la plaque 20 de fibres optiques. Les évidements sont formés de par la différence entre la vitesse de dissolution du matériau du coeur 21 par l'acide et la vitesse de dissolution du matériau de la gaine 22.

On dépose une couche métallique 50, par exemple du chrome, sur la surface de la partie en saillie de gaine 22 qui délimite chaque évidement 26. De préférence, la couche métallique 50 n'est déposée que sur la surface latérale de la partie de gaine 22. Cela peut être notamment obtenu par dépôt à faisceau d'électrons avec un angle d'inclinaison adapté.

On réalise ensuite le filtre angulaire 30 sur la face avant de la plaque 20 de fibres optiques. Le filtre angulaire 30 repose alors sur la face avant 23C du coeur 21 de chaque fibre optique, ainsi que sur la face avant 23G de la gaine 22. Le filtre angulaire peut être réalisé selon l'un quelconque des modes de réalisation décrits précédemment.

On dépose ensuite la couche de phosphore en film mince 10 sur la face avant de la plaque 20. La couche de phosphore vient recouvrir le filtre angulaire 30.

Une couche réflectrice 40, par exemple en aluminium, est enfin déposée sur la couche de phosphore à film mince 10. Il est à noter qu'une couche de $MgF_2$ (non représentée) peut également être déposée sur la couche de phosphore à film mince 10, préalablement au dépôt de la couche d'aluminium 40, dans le but d'améliorer la réflectivité de la couche d'aluminium 40.

Enfin, on supprime les parties des différentes couches 30, 10, 40 qui reposent sur la face avant 23G de la gaine 22 de chaque fibre optique. Cette étape peut être réalisée mécaniquement.

De préférence, après cette dernière étape, la face avant 23G de la gaine 22 de chaque fibre vient sensiblement au même niveau que la couche d'aluminium 40, de sorte que la face avant de l'écran phosphore ainsi formé est sensiblement plane.

La face avant 23G de la gaine 22 de chaque fibre peut également venir sensiblement au même niveau que la face avant de la couche de phosphore à film mince 10, de sorte que la couche d'aluminium 40 soit ensuite déposée continûment sur les différents plots de phosphore 12 et sur la face avant 23G de la gaine 22 de chaque fibre optique. Ainsi, la face avant de l'écran phosphore ainsi formé est sensiblement plane et définie par la couche d'aluminium 40.

Ainsi, des plots de couches sont réalisés au niveau de chaque coeur 21 de fibre optique, sans recouvrir la gaine 22 de celle-ci. Chaque plot est formé d'une couche de phosphore 10, d'un filtre angulaire 30 et d'une couche d'aluminium 40. De plus, les plots sont délimités latéralement par la couche métallique 50 qui assure une fonction de réflexion des rayons lumineux.

Ainsi, tout rayon lumineux émis par un plot de phosphore 12 ne peut être transmis que dans le coeur 21 de la fibre optique adjacente. Le contraste de l'écran phosphore est ainsi particulièrement élevé.

Selon une variante illustrée sur la Figure 7, les plots de couches ne sont pas délimités latéralement par une partie de gaine de fibre optique, mais par des murs d'un matériau rapporté formés par des techniques classiques de photolithographie.

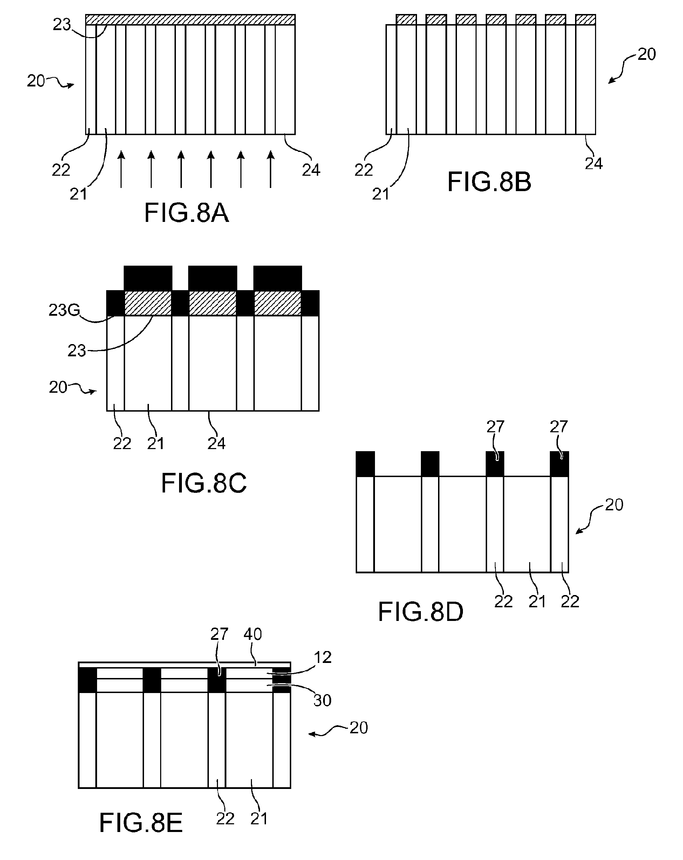

Les Figures 8A à 8E illustrent les différentes étapes du procédé de réalisation de l'écran phosphore représenté sur la Figure 7.

Comme le montre la Figure 8A, on dépose une résine photosensible sur la face avant 23 de la plaque 20 de fibres optiques, puis on soumet la plaque 20 à un flux lumineux à partir de la face arrière 24. Ainsi, la gaine de chaque fibre optique agit comme un masque.

On supprime la résine non activée par gravure chimique (Figure 8B). Ainsi, des plots de résine sont disposés sur le coeur 21 de chaque fibre optique.

On dépose un matériau adapté sur les plots de résine et la face avant 23G des gaines 22 (Figure 8C). Le matériau peut être un métal, par exemple du nickel ou de l'aluminium, voire du silicium. Ce matériau peut être déposé sur une sous-couche d'accroche, par exemple du NiCr-TiW.

Puis, on supprime la résine activée par gravure chimique (Figure 8D). Ainsi, les murs 27 ainsi formés sont disposés sur la gaine 22 de chaque fibre optique. De préférence, les murs 27 présentent une épaisseur de l'ordre du micron, par exemple $1\mu m$ à $1,5\mu m$.

Enfin, la couche de phosphore à film mince 10, le filtre angulaire 30 et la couche d'aluminium 40 sont déposés suivant les mêmes étapes que celles décrites en référence à la Figure 6.

On obtient ainsi (Figure 8E) un écran phosphore similaire à celui illustré sur la Figure 6, à la différence près que les plots de couches 10, 30, 40 sont délimités latéralement par les murs 27 et non par des parties de gaine de fibre optique.

Bien entendu, diverses modifications peuvent être apportées par l'homme du métier à l'invention limitées seulement par la portée des revendications présentes.

## Revendications

1. Ecran phosphore à fibres optiques comprenant une couche de phosphore en film mince (10) et une plaque (20) de fibres optiques assemblées en faisceau et orientées suivant l'épaisseur de ladite plaque (20), chaque fibre optique comportant un coeur (21) d'indice optique $n_C$ entouré d'une gaine (22) d'indice optique $n_G$, ladite couche de phosphore en film mince (10) étant disposée sur une face (23) de la plaque (20),

    **caractérisé en ce qu'**il comprend un filtre angulaire (30) comportant au moins une couche (31 ; 32), disposé entre ladite couche de phosphore en film mince (10) et ladite face (23) de la plaque (20), de sorte que tout rayon lumineux émis par la couche de phosphore en film mince (10) et traversant le filtre angulaire (30) pénètre dans le coeur (21) de la fibre optique adjacente avec un angle de réfraction inférieur ou égal à $\pi/2$-arcsin$(n_G/n_C)$.

2. Ecran phosphore à fibres optiques selon la revendication 1, **caractérisé en ce que** ledit filtre angulaire (30) est directement au contact de la couche de phosphore en film mince (10) d'une part et de ladite face (23) de la plaque (20) de fibres optiques d'autre part.

3. Ecran phosphore à fibres optiques selon la revendication 1 ou 2, **caractérisé en ce que** ledit filtre angulaire (30) est un filtre interférentiel comportant un empilement de couches minces (31) dont les indices optiques et les épaisseurs sont adaptés à transmettre un rayon lumineux dans le coeur (21) de la fibre optique adjacente selon un angle de réfraction inférieur ou égal à $\pi/2$-arcsin$(n_G/n_C)$.

4. Ecran phosphore à fibres optiques selon la revendication 3, **caractérisé en ce que** ladite pluralité comprend un premier ensemble (31A) de couches minces en un premier matériau et un second ensemble (31B) de couches minces en un second matériau présentant un indice optique inférieur à celui du premier matériau.

5. Ecran phosphore à fibres optiques selon la revendication 4, **caractérisé en ce que** le premier matériau est choisi parmi le $TiO_2$ et le $Ta_2O_5$, et le second matériau est choisi parmi le $MgF_2$, le $CaF_2$ et le $SiO_2$.

6. Ecran phosphore à fibres optiques selon la revendication 4 ou 5, **caractérisé en ce que** le premier matériau et/ou le second matériau forment un milieu poreux ou un milieu non-poreux.

7. Ecran phosphore à fibres optiques selon la revendication 1 ou 2, **caractérisé en ce que** ledit filtre angulaire (30) comporte une unique couche (32).

8. Ecran phosphore à fibres optiques selon la revendication 7, **caractérisé en ce que** ladite unique couche (32) présente un indice optique $n_F$ inférieur ou égal à $\sqrt{n_C{}^2 - n_G{}^2}$ .

9. Ecran phosphore à fibres optiques selon la revendication 7 ou 8, **caractérisé en ce que** le matériau de l'unique couche (32) du filtre angulaire (30) forme un milieu non-poreux.

10. Ecran phosphore à fibres optiques selon la revendication 7 ou 8, **caractérisé en ce que** le matériau de l'unique couche (32) du filtre angulaire (30) forme un milieu poreux.

11. Ecran phosphore à fibres optiques selon la revendication 10, **caractérisé en ce que** ladite unique couche (32) du filtre angulaire (30) est formée d'une pluralité de tiges nanométriques de $SiO_2$.

12. Ecran phosphore à fibres optiques selon la revendication 10 ou 11, **caractérisé en ce que** ladite unique couche (32) du filtre angulaire (30) présente un indice optique inférieur ou égal à 1,1.

13. Ecran phosphore à fibres optiques selon l'une quelconque des revendications 1 à 12, **caractérisé en ce que** ladite couche de phosphore à film mince (10) est recouverte, sur sa face opposée audit filtre angulaire (30), d'une couche réfléchissante vis-à-vis des rayons lumineux émis par ladite couche de phosphore à film mince (10).

14. Ecran phosphore à fibres optiques selon l'une quelconque des revendications 1 à 13, **caractérisé en ce que** ladite couche de phosphore à film mince (10) forme une pluralité de plots (12) de phosphore disposés de manière à recouvrir chacun le coeur (21) de la fibre optique adjacente.

15. Ecran phosphore à fibres optiques selon la revendication 14, **caractérisé en ce que** le filtre angulaire (30) forme une pluralité de plots disposés de manière à être chacun sensiblement recouvert par un plot de phosphore (12).

16. Ecran phosphore à fibres optiques selon la revendication 15, **caractérisé en ce que** chaque ensemble formé d'un empilement d'un plot (12) de phosphore et d'un plot de filtre angulaire est disposé dans un évidement de la face avant (23) de la plaque (20) de fibres optiques, et délimité latéralement par une partie en saillie de gaine (22) de fibre optique.

17. Ecran phosphore à fibres optiques selon la revendication 16, **caractérisé en ce que** la surface latérale de la partie en saillie de gaine (22) de fibre optique est recouverte d'une couche (50) d'un matériau métallique.

18. Ecran phosphore à fibres optiques selon la revendication 15, **caractérisé en ce que** chaque ensemble formé d'un empilement d'un plot (12) de phosphore et d'un plot de filtre angulaire est délimité latéralement par des murs (27) rapportés, chaque mur (27) étant disposé de manière à recouvrir sensiblement la gaine (22) de la fibre optique adjacente.

19. Dispositif optique comportant une photocathode pour recevoir des photons et émettre en réponse des électrons, et un écran phosphore à fibres optiques selon l'une quelconque des revendications 1 à 18 pour former une image à partir desdits électrons.

20. Dispositif optique selon la revendication 19, comportant en outre des moyens de multiplication d'électrons disposés entre ladite photocathode et ledit écran phosphore.

21. Dispositif optique selon la revendication 20, ledit dispositif optique étant un tube intensificateur d'image.

**Patentansprüche**

1. Leuchtstoffschirm mit optischen Fasern, umfassend eine Leuchtstoffschicht aus einem dünnen Film (10) und eine Platte (20) von optischen Fasern, die als Strahl angeordnet und entlang der Dicke der Platte (20) orientiert sind, wobei jede optische Faser einen Kern (21) mit optischem Index nc umfaßt, der von einem Mantel (22) mit optischem Index $n_G$ umgeben ist, wobei die Leuchtstoffschicht aus einem dünnen Film (10) an einer Seite (23) der Platte (20) angeordnet ist,
**dadurch gekennzeichnet, dass** er ein Winkelfilter (30) umfaßt, umfassend wenigstens eine Schicht (31; 32), der zwischen der Leuchtstoffschicht aus einem dünnen Film (10) und der Seite (23) der Platte (20) derart angeordnet ist, dass jeder Lichtstrahl, der von der Leuchtstoffschicht aus einem dünnen Film (10) emittiert wird und das Winkelfilter (30) durchquert, in den Kern (21) der benachbarten optischen Faser mit einem Brechungswinkel eindringt, der kleiner oder gleich $\pi/2$-arcsin ($n_G/n_C$) ist.

2. Leuchtstoffschirm mit optischen Fasern nach Anspruch 1, **dadurch gekennzeichnet, dass** das Winkelfilter (30) direkt in Kontakt ist einerseits mit der Leuchtstoffschicht aus einem dünnen Film (10) und andererseits mit der Seite (23) der Platte (20) von optischen Fasern.

3. Leuchtstoffschirm mit optischen Fasern nach Anspruch 1 oder 2, **dadurch gekennzeichnet, dass** das Winkelfilter (30) ein Interferenzfilter ist, umfassend einen Stapel von dünnen Schichten (31), deren optische Indizes und Dicken dazu ausgelegt sind, einen Lichtstrahl in den Kern (21) der benachbarten optischen Faser unter einem Brechungswinkel zu transmittieren, der kleiner oder gleich $\pi/2$-arcsin

$(n_G/n_C)$ ist.

4. Leuchtstoffschirm mit optischen Fasern nach Anspruch 3, **dadurch gekennzeichnet, dass** die Mehrzahl eine erste Gruppe (31A) von dünnen Schichten aus einem ersten Material und eine zweite Gruppe (31B) von dünnen Schichten aus einem zweiten Material umfaßt, das einen kleineren optischen Index aufweist als jener des ersten Materials.

5. Leuchtstoffschirm mit optischen Fasern nach Anspruch 4, **dadurch gekennzeichnet, dass** das erste Material ausgewählt ist aus $TiO_2$ und $Ta_2O_5$, und das zweite Material ausgewählt ist aus $MgF_2$, $CaF_2$ und $SiO_2$.

6. Leuchtstoffschirm mit optischen Fasern nach Anspruch 4 oder 5, **dadurch gekennzeichnet, dass** das erste Material und/oder das zweite Material eine poröse Umgebung oder eine nicht-poröse Umgebung bilden.

7. Leuchtstoffschirm mit optischen Fasern nach Anspruch 1 oder 2, **dadurch gekennzeichnet, dass** das Winkelfilter (30) eine einzige Schicht (32) umfaßt.

8. Leuchtstoffschirm mit optischen Fasern nach Anspruch 7, **dadurch gekennzeichnet, dass** die einzige Schicht (32) einen optischen Index $n_F$ aufweist, der kleiner oder gleich $\sqrt{n_C^2 - n_G^2}$ ist.

9. Leuchtstoffschirm mit optischen Fasern nach Anspruch 7 oder 8, **dadurch gekennzeichnet, dass** das Material der einzigen Schicht (32) des Winkelfilters (30) eine nicht-poröse Umgebung bildet.

10. Leuchtstoffschirm mit optischen Fasern nach Anspruch 7 oder 8, **dadurch gekennzeichnet, dass** das Material der einzigen Schicht (32) des Winkelfilters (30) eine poröse Umgebung bildet.

11. Leuchtstoffschirm mit optischen Fasern nach Anspruch 10, **dadurch gekennzeichnet, dass** die einzige Schicht (32) des Winkelfilters (30) aus einer Mehrzahl von nanometrischen Stäben aus $SiO_2$ gebildet ist.

12. Leuchtstoffschirm mit optischen Fasern nach Anspruch 10 oder 11, **dadurch gekennzeichnet, dass** die einzige Schicht (32) des Winkelfilters (30) einen optischen Index kleiner oder gleich 1,1 aufweist.

13. Leuchtstoffschirm mit optischen Fasern nach einem der Ansprüche 1 bis 12, **dadurch gekennzeichnet, dass** die Leuchtstoffschicht aus einem dünnen Film (10) an ihrer dem Winkelfilter (30) gegenüberliegenden Seite mit einer Schicht bedeckt ist, die hinsichtlich der Lichtstrahlen reflektierend ist, welche von der Leuchtstoffschicht aus einem dünnen Film (10) emittiert werden.

14. Leuchtstoffschirm mit optischen Fasern nach einem der Ansprüche 1 bis 13, **dadurch gekennzeichnet, dass** die Leuchtstoffschicht aus einem dünnen Film (10) eine Mehrzahl von Leuchtstoffpunkten (12) bildet, die derart verteilt sind, dass jeder den Kern (21) der benachbarten optischen Faser bedeckt.

15. Leuchtstoffschirm mit optischen Fasern nach Anspruch 14, **dadurch gekennzeichnet, dass** das Winkelfilter (30) eine Mehrzahl von Punkten bildet, die derart verteilt sind, dass jeder im wesentlichen durch einen Leuchtstoffpunkt (12) bedeckt ist.

16. Leuchtstoffschirm mit optischen Fasern nach Anspruch 15, **dadurch gekennzeichnet, dass** jede Gruppe, gebildet durch einen Stapel aus einem Leuchtstoffpunkt (12) und einem Winkelfilterpunkt, in einer Aussparung der Vorderseite (23) der Platte (20) aus optischen Fasern angeordnet und lateral durch einen vorstehenden Bereich des Mantels (22) der optischen Faser begrenzt ist.

17. Leuchtstoffschirm mit optischen Fasern nach Anspruch 16, **dadurch gekennzeichnet, dass** die laterale Oberfläche des vorstehenden Bereichs des Mantels (22) der optischen Faser mit einer Schicht (50) aus einem metallischen Material bedeckt ist.

18. Leuchtstoffschirm mit optischen Fasern nach Anspruch 15, **dadurch gekennzeichnet, dass** jede Gruppe, gebildet durch einen Stapel aus einem Leuchtstoffpunkt (12) und einem Winkelfilterpunkt, lateral durch aufgesetzte Wände (27) begrenzt ist, wobei jede Wand (27) derart angeordnet ist, dass sie im wesentlichen den Mantel (22) der benachbarten optischen Faser bedeckt.

19. Optische Vorrichtung, umfassend eine Fotokatode zum Empfangen von Photonen und zum Emittieren von Elektronen in Antwort hierauf, sowie einen Leuchtstoffschirm mit optischen Fasern nach einem der Ansprüche 1 bis 18 zum Bilden eines Bildes ausgehend von den Elektronen.

20. Optische Vorrichtung nach Anspruch 19, ferner umfassend Elektronenvervielfachungsmittel, die zwischen der Fotokatode und dem Leuchtstoffschirm angeordnet sind.

21. Optische Vorrichtung nach Anspruch 20, wobei die optische Vorrichtung eine Bildverstärkerröhre ist.

**Claims**

1. Optical fiber phosphor screen comprising a thin film phosphor layer (10) and a optical fiber faceplate (20) assembled in a bundle and oriented along the thickness of said faceplate (20), each optical fiber comprising a core (21) of optical index $n_C$ surrounded by a cladding (22) of optical index $n_G$, said thin film phosphor layer (10) being arranged on a face (23) of the faceplate (20),
**characterised in that** it comprises an angular filter (30) comprising at least one layer (31; 32), arranged between said thin film phosphor layer (10) and said face (23) of the faceplate (20), such that every light ray emitted by the thin film phosphor layer (10) and passing through the angular filter (30) penetrates into the core (21) of the adjacent optical fiber with an angle of refraction less than or equal to $\pi/2$-arcsin$(n_G/n_C)$.

2. Optical fiber phosphor screen according to claim 1, **characterised in that** said angular filter (30) is directly in contact with the thin film phosphor layer (10) on the one hand and said face (23) of the optical fiber faceplate (20) on the other hand.

3. Optical fiber phosphor screen according to claim 1 or 2, **characterised in that** said angular filter (30) is an interference filter comprising a stack of thin films (31), the optical indices and the thicknesses of which are adapted to transmit a light ray in the core (21) of the adjacent optical fiber according to an angle of refraction less than or equal to $\pi/2$-arcsin$(n_G/n_C)$.

4. Optical fiber phosphor screen according to claim 3, **characterised in that** said plurality comprises a first assembly (31A) of thin films made of a first material and a second assembly (31B) of thin films made of a second material having an optical index less than that of the first material.

5. Optical fiber phosphor screen according to claim 4, **characterised in that** the first material is selected from $TiO_2$ and $Ta_2O_5$, and the second material is selected from $MgF_2$, $CaF_2$ and $SiO_2$.

6. Optical fiber phosphor screen according to claim 4 or 5, **characterised in that** the first material and/or the second material form a porous medium or a non-porous medium.

7. Optical fiber phosphor screen according to claim 1 or 2, **characterised in that** said angular filter (30) comprises a single layer (32).

8. Optical fiber phosphor screen according to claim 7, **characterised in that** said single layer (32) has an optical index $n_F$ less than or equal to $\sqrt{n_C{}^2 - n_G{}^2}$ .

9. Optical fiber phosphor screen according to claim 7 or 8, **characterised in that** the material of the single layer (32) of the angular filter (30) forms a non-porous medium.

10. Optical fiber phosphor screen according to claim 7 or 8, **characterised in that** the material of the single layer (32) of the angular filter (30) forms a porous medium.

11. Optical fiber phosphor screen according to claim 10, **characterised in that** said single layer (32) of the angular filter (30) is formed of a plurality of nanometric $SiO_2$ rods.

12. Optical fiber phosphor screen according to claim 10 or 11, **characterised in that** said single layer (32) of the angular filter (30) has an optical index less than or equal to 1.1.

13. Optical fiber phosphor screen according to any of claims 1 to 12, **characterised in that** said thin film phosphor layer (10) is covered, on its face opposite to said angular filter (30), by a reflective layer vis-à-vis light rays emitted by said thin film phosphor layer (10).

14. Optical fiber phosphor screen according to any of claims 1 to 13, **characterised in that** said thin film phosphor layer (10) forms a plurality of phosphor pads (12) arranged so as to each cover the core (21) of the adjacent optical fiber.

15. Optical fiber phosphor screen according to claim 14, **characterised in that** the angular filter (30) forms a plurality of pads arranged so as to be each substantially covered by a phosphor pad (12).

16. Optical fiber phosphor screen according to claim 15, **characterised in that** each assembly formed of a stack of a phosphor pad (12) and an angular filter pad is arranged in a hollowing out of the front face (23) of the optical fiber faceplate (20), and delimited laterally by a projecting part of optical fiber cladding (22).

17. Optical fiber phosphor screen according to claim 16, **characterised in that** the lateral surface of the projecting part of optical fiber cladding (22) is covered with a layer (50) of a metallic material.

18. Optical fiber phosphor screen according to claim 15, **characterised in that** each assembly formed of a stack of a phosphor pad (12) and an angular filter pad is delimited laterally by added walls (27), each wall (27) being arranged so as to substantially cover the cladding (22) of the adjacent optical fiber.

19. Optical device comprising a photocathode to receive photons and emit electrons in response, and a optical fiber phosphor screen according to any of claims 1 to 18 to form an image from said electrons.

20. Optical device according to claim 19, moreover comprising electron multiplication means arranged between said photocathode and said phosphor screen.

21. Optical device according to claim 20, said optical device being an image intensifier tube.

FIG.1

$\theta_R^{(2)}$   $\theta_R^{(1)}$

10

11

30

23

20

22   21   24

FIG.2

FIG.3

FIG.4A

FIG.4B

$n_P$

$\theta_p$

10

11

30

$n_F$

32

23

$\theta_R$

20

$n_C$

21   22

$n_G$

FIG.5

FIG.6

FIG.7

EP 2 583 299 B1

FIG.8A

FIG.8B

FIG.8C

FIG.8D

FIG.8E

22

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0848410 A1
- JP 59201349 B
- US 5127080 A
- US 5594253 A
- US 4739172 A

**Littérature non-brevet citée dans la description**

- **XI et al.** Optical thin-film materials with low refractive index for broadband elimination of Fresnel reflection. *Nat. Photonics,* 2007, vol. 1, 176-179
- **XI et al.** Very low-refractive-index optical thin films consisting of an array of SiO2 nanorods. *Opt. Lett.,* 2006, vol. 31 (5), 601-603